# DEMANDE DE BREVET EUROPEEN

(11) **EP 1 440 830 A1**
(43) Date de publication de la demande: **28.07.2004**
(21) Numéro de dépôt: 04364003.6
(22) Date de dépôt: 22.01.2004
(51) Int. Cl.: B60J 7/00, B60J 3/02

(54) **Dispositif d'occultation du pavillon et d'une partie supérieure du pare-brise d'un véhicule automobile**

(30) Priorité: 22.01.2003 FR 0300695
(71) Demandeur: WAGON AUTOMOTIVE SNC, 79302 Bressuire Cédex (FR)
(72) Inventeur: Chauvin, René, 79300 Bressuire (FR)
(74) Mandataire: Vidon, Patrice

(57) **Abrégé**

L'invention a pour objet un dispositif d'occultation d'un pavillon de véhicule automobile, du type mettant en oeuvre des moyens d'occultation (1) mobiles guidés le long de moyens de guidage (4) s'étendant sensiblement parallèlement audit pavillon, une première partie desdits moyens d'occultation pouvant être déployée au-delà desdits moyens de guidage pour prendre une position d'occultation d'une portion supérieure du pare-brise dudit véhicule

## Description

Le domaine de l'invention est celui de l'occultation de surfaces vitrées d'un véhicule automobile, et notamment de surfaces vitrées correspondant au pavillon et au pare-brise de ce dernier. Plus précisément, l'invention concerne les dispositifs mettant en oeuvre des moyens d'occultation, tels qu'une toile, mobiles entre au moins une position repliée et au moins une position déployée, en particulier pour un pavillon de véhicule.

De façon assez répandue, les toits des véhicules automobiles sont pourvus d'une baie et/ou d'une ouverture vitrée. Diverses solutions ont été proposées pour limiter le passage des rayons du soleil, notamment en utilisant des vitres teintées ou en rapportant un motif filtrant sur la vitre par sérigraphie.

La tendance actuelle est de proposer des véhicules automobiles présentant de plus en plus de surfaces vitrées. On cherche donc à augmenter tant que faire se peut la surface des vitres latérales, des pare-brises et des lunettes arrière, et également des pavillons.

On développe également des pavillons intégralement, ou essentiellement, vitrés, et ne faisant qu'un, au moins visuellement, avec le pare-brise (absence d'un élément de carrosserie extérieur entre les deux).

Les objectifs de ces développements sont notamment d'offrir :
- une meilleure visibilité pour les occupants du véhicule ;
- une luminosité accrue à l'intérieur du véhicule ;
- une sensation d'espace élargi pour les occupants ;
- une amélioration esthétique générale du véhicule ;
- ...

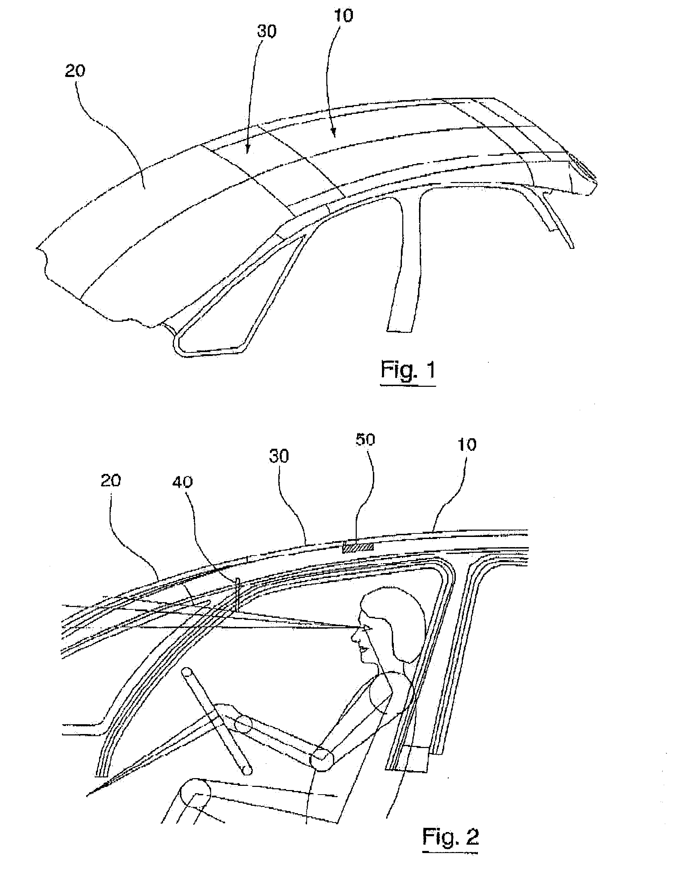

Les figures 1 et 2 illustrent ainsi un véhicule de ce type, sur lequel il est prévu une surface vitrée quasi continue, englobant le pare-brise et le pavillon. Selon ce mode de réalisation, le véhicule comprend un pavillon vitré 10 et un pare-brise 20 se prolongeant par l'intermédiaire d'un panneau vitré intermédiaire 30 en direction du pavillon pour rejoindre celui-ci de façon sensiblement coplanaire et affleurante. Le panneau intermédiaire est bien sûr optionnel, le pare-brise et le pavillon pouvant être configurés pour couvrir toute la surface.

L'invention s'applique en particulier, mais non exclusivement, à ce type de véhicule.

De façon connue, les véhicules automobiles sont généralement équipés de palettes pare-soleil mobiles 40 classiquement montées au voisinage de la partie supérieure du pare-brise, approximativement dans la position représentée sur la figure 2.

Sur les véhicules avec pare-brise classiques, ces palettes pare-soleil sont montées sur un élément de carrosserie au voisinage du bord supérieur du pare-brise, de façon à être mobiles en rotation entre une position rabattue contre le pavillon et une position rabaissée vers le pare-brise pour protéger les yeux du conducteur et/ou du passager avant contre le rayonnement du soleil.

Il apparaît que cela n'est pas possible, selon l'agencement illustré par les figures 1 et 2, puisqu'il n'y a pas d'élément de carrosserie ou de renfort entre les panneaux vitrés. L'élément utilisable le plus proche serait la poutre 50 se situant au niveau où se rejoignent le pavillon vitré 10 et le prolongement 30 du pare-brise 20. Mais cette poutre n'est pas un emplacement approprié pour la mise en place d'une palette pare-soleil, celle-ci ne pouvant à cet endroit exercer de façon efficace sa fonction de protection contre le soleil sans nuire à la vision et au confort du conducteur. En outre, cela poserait un problème de sécurité, la palette ne devant pas pouvoir rentrer en contact avec la tête d'un passager avant.

Il serait envisageable techniquement de rapporter sur le pare-brise 10, par exemple par collage, des supports de palettes pare-soleil. Toutefois, cette solution s'avérerait particulièrement inesthétique et incompatible avec l'effet et l'ergonomie recherchés par ce type de véhicule.

Par ailleurs, la mise en oeuvre de tels pare-soleil suppose, bien sûr, la fabrication et le montage de deux équipements spécifiques, donc des coûts (fabrication, stockage, montage) et des temps de montage relativement importants.

L'invention a notamment pour objectif de pallier ces inconvénients de l'art antérieur.

Plus précisément, un objectif de l'invention est de proposer une solution nouvelle permettant d'obtenir une occultation efficace de la partie supérieure d'un pare-brise, similaire à celle fournie par les palettes pare-soleil classiques, notamment pour des véhicules à pavillons vitrés.

Un autre objectif de l'invention est de fournir une telle solution, permettant d'obtenir des gains notables en temps et en coût, pour la fabrication, la logistique, la livraison et le montage.

L'invention a également pour objectif de fournir une telle solution qui soit adaptée à l'esthétique et à l'ergonomie des véhicules à pavillon vitré, et notamment des véhicules du type de ceux décrits précédemment, présentant une surface vitrée continue entre le pare-brise et le pavillon.

L'invention a aussi pour objectif de fournir une telle solution qui soit simple de conception et facile à mettre en oeuvre.

L'invention a encore pour objectif de fournir une telle solution qui soit simple et pratique d'utilisation pour les occupants du véhicule.

Ces objectifs, ainsi que d'autres qui apparaîtront par la suite, sont atteints grâce à l'invention qui a pour objet un dispositif d'occultation d'un pavillon de véhicule automobile, du type mettant en oeuvre des moyens d'occultation mobiles guidés le long de moyens de guidage s'étendant sensiblement parallèlement audit pavillon, une première partie desdits moyens d'occultation pouvant être déployée au-delà desdits moyens de guidagepour prendre une position d'occultation d'une portion supérieure du pare-brise dudit véhicule (de façon à obtenir une fonction pare-soleil, ou protection des yeux).

L'invention propose donc une approche tout à fait nouvelle des équipements de protection des occupants d'un véhicule contre le soleil, selon laquelle les fonctions généralement assurées par les palettes pare-soleil et le store d'occultation du pavillon sont regroupés et combinés pour former un seul et unique équipement.

Cette approche entraîne de nombreux avantages.

En effet, la logistique, la fabrication et la livraison sont considérablement simplifiées du fait que les fonctions « store » et « palettes » sont regroupées dans un ensemble unique, en comparaison à la gestion et à l'assemblage des pièces constituant les équipements « store » et « palettes » considérés séparément.

De plus, le montage dans le véhicule du « store/palettes » selon l'invention est obtenu par le biais d'une gamme de montage unique, des gains pouvant également être envisagés par rapport au temps de montage correspondant.

Par ailleurs, on comprend que le dispositif selon l'invention offre la possibilité d'être déployé dans au moins une première position classique d'occultation du pavillon, puis, en poursuivant le déploiement, dans une position au voisinage du pare-brise, pour protéger les yeux des occupants des places avant du véhicule.

En outre, la partie frontale du store (première partie) susceptible d'exercer la fonction de palette pare-soleil peut être éloignée du pare-brise dans une position de rangement dans laquelle elle n'apparaît aucunement derrière le pare-brise ou au voisinage de la zone où se rejoignent le pare-brise et le pavillon vitré.

L'esthétique générale des véhicules du type de ceux décrits précédemment est ainsi respecté, et la manipulation de l'ensemble est très simple (qu'elle soit manuelle ou motorisée).

L'invention propose donc une solution originale, allant à l'encontre des solutions classiques de l'art antérieur selon lesquelles des palettes pare-soleil sont montées de façon constante au voisinage des pare-brise, et de façon indépendante des stores de pavillon.

Les moyens d'occultation peuvent notamment être formés d'une toile (ou de plusieurs portions de toile, ayant le cas échéant des pouvoirs d'occultation différents). Un avantage de cette approche est que l'élément pare-soleil n'est plus opaque. Il peut conserver une certaine transparence, et offre donc une visibilité partielle, en évitant bien sûr l'éblouissement.

Selon une première approche, ladite première partie des moyens d'occultation forme un angle non nul avec une seconde partie desdits moyens d'occultation occultant au moins une portion dudit pavillon.

Selon une deuxième approche, lorsque ladite première partie des moyens d'occultation est déployée au delà des moyens de guidage, lesdits moyens d'occultation s'étendent dans un plan formant un angle non nul avec ledit pavillon.

Selon une solution préférée, le dispositif comprend des moyens d'orientation permettant d'amener ladite première partie des moyens d'occultation dans ladite position d'occultation d'une portion supérieure du pare-brise dudit véhicule.

Par moyens d'orientation, on entend ici des moyens assurant ou entraînant une modification de l'orientation des moyens d'occultation, par rapport à l'orientation de la partie s'étendant en regard du pavillon.

Lesdits moyens d'orientation s'étendent avantageusement dans le prolongement desdits moyens de guidage.

Selon un premier mode de réalisation, lesdits moyens d'orientation s'étendent sur une courte distance par rapport à la longueur de ladite première partie des moyens d'occultation.

Il n'est en effet pas obligatoire, ni même souhaitable (pour des questions de sécurité, il est en effet interdit d'avoir des éléments rigides dans cette zone, si elle est atteignable par une tête), que ces éléments d'orientation s'étendent sur toute la longueur correspondant à la fonction pare-soleil, ce qui permet de conserver l'aspect esthétique et l'ergonomie souhaités, notamment lorsque les moyens d'occultation sont repliés.

Dans ce cas, lesdits moyens d'orientation comprennent avantageusement au moins une portion de rail incurvée.

De cette façon, on imprime aux moyens d'occultation un changement de direction, vers une position similaire à celle qu'occuperait une palette pare-soleil, avec des moyens simples, efficaces et de conception homogène avec celle des moyens de guidage équipant classiquement un store de pavillon.

Selon un autre mode de réalisation (qui peut éventuellement être combiné avec le précédent), lesdits moyens d'orientation peuvent être eux-mêmes mobiles, de façon à pouvoir occuper au moins deux positions :
- une position selon laquelle ils sont parallèles auxdits premiers moyens de guidage ;
- une position selon laquelle ils orientent lesdits moyens d'occultation vers le bas.

Dans ce cas, ils peuvent être réalisés dans un matériau déformable, ou être montés articulés (par exemple pivotants) sur lesdits premiers moyens de guidage.

Selon encore un autre mode de réalisation, lesdits moyens d'orientation sont montés mobiles le long desdits moyens de guidage.

Dans ce cas, lesdits moyens d'orientation sont préférentiellement montés sur au moins un élément de base par l'intermédiaire d'une articulation, de telle sorte que lesdits moyens d'orientation puissent occuper au moins deux positions :
- une position selon laquelle lesdits moyens d'orientation et ledit élément de base sont dans le prolongement l'un de l'autre et sensiblement parallèles auxdits moyens de guidage ;
- une position correspondant à ladite position d'occultation selon laquelle lesdits moyens d'orientation sont inclinés vers le bas.

Ainsi, les moyens d'orientation peuvent être amenés dans une position correspondant à l'occultation partielle du pare-brise dans laquelle ils sont apparents, mais peuvent également, lorsqu'ils sont inactifs vis-à-vis de l'occultation du pare-brise, être escamotés à l'intérieur des rails de guidage. Ils occupent alors une position discrète.

De plus, un tel mode de réalisation permet de présenter l'invention selon un mode d'utilisation proche de celui des palettes pare-soleil. En d'autres termes, le dispositif d'occultation selon l'invention peut être manipulé avec des gestes qui conservent en partie des habitudes de l'utilisateur vis-à-vis des palettes traditionnelles.

Préférentiellement, le dispositif comprend des moyens d'indexation de la position desdits moyens d'orientation par rapport audit ou auxdits éléments de base.

On peut de cette façon proposer plusieurs positions d'occultation à l'utilisateur.

En outre, ces moyens d'indexation permettent de maintenir une inclinaison donnée des moyens d'orientation à l'encontre d'une éventuelle force de rappel s'exerçant sur les moyens d'occultation.

Selon une solution avantageuse, ledit ou lesdits éléments de base forment chacun un patin de coulissement le long desdits moyens de guidage.

On obtient de cette façon une solution particulièrement simple, efficace et facile à mettre en oeuvre.

Selon une solution préférée, le dispositif comprend des éléments semi-rigides assurant le guidage et/ou le maintien desdits moyens d'occultation dans ladite position d'occultation d'une portion supérieure du pare-brise dudit véhicule.

Un tel agencement évite la nécessité de recourir à des moyens de guidage et de maintien se prolongeant sur toute la longueur de la toile correspondant à la position « pare-soleil » (seconde partie des moyens d'occultation), avec les inconvénients que cela entraîneraient tels que ceux cités précédemment.

Ainsi, au-delà de la portion de rail incurvée, la tenue de la toile peut être essentiellement assurée par les éléments semi-rigides, dans une position prédéterminée imposée principalement par la courbure et/ou l'inclinaison du rail complémentaire.

Selon une solution avantageuse, lesdits éléments semi-rigides sont des moyens d'entraînement desdits moyens d'occultation.

Avantageusement, lesdits moyens d'entraînement comprennent deux vis sans fin semi-rigides s'étendant chacune respectivement au voisinage d'un bord latéral desdits moyens d'occultation.

Dans ce cas, lesdites vis sans fin s'engrènent préférentiellement avec au moins un pignon commun. De cette façon, on obtient un déploiement/repliement de la toile au cours duquel l'organe d'entraînement reste en permanence parallèle à lui-même, évitant ainsi les phénomènes de coincement, de plissement de la toile, de mauvais enroulements...

Selon une première variante, ledit pignon est un pignon fou.

Cette variante est notamment destinée à un store manoeuvré manuellement.

Selon une deuxième variante, ledit pignon est couplé à des moyens d'entraînement motorisés.

Selon l'une ou l'autre de ces variantes, le dispositif comprend avantageusement des moyens permettant d'arrêter lesdits moyens d'occultation en plusieurs positions de déploiement de ladite toile.

Dans ce cas, lesdits moyens d'arrêt peuvent avantageusement agir sur ledit pignon, de façon à le maintenir immobile en rotation.

Le plus souvent, lesdits moyens d'occultation d'un store sont constitués par une toile solidaire par l'une de ses extrémités d'un tube d'enroulement couplé à des moyens de rappel élastique en vue de provoquer ou faciliter l'enroulement de la toile sur le tube.

Les moyens d'arrêt proposés par l'invention sont donc avantageux à plusieurs titres :
- ils peuvent agir en toutes positions de la toile, proposant donc à l'utilisateur une pluralité de positions de déploiement intermédiaires ;
- ils sont discrets, et évitent donc la mise en place de moyens d'accrochage de l'organe d'entraînement de la toile dans l'habitacle (ce qui pourrait être gênant et inesthétique).

Selon une autre caractéristique avantageuse de l'invention, le dispositif comprend des moyens de maintien de ladite seconde partie des moyens d'occultation sensiblement parallèle audit pavillon, lorsque ladite première partie des moyens d'occultation est déployée.

Préférentiellement, lesdits moyens de maintien comprennent une baleine s'étendant transversalement par rapport à l'axe de déploiement de ladite toile, le dispositif comprenant avantageusement au moins une butée contre laquelle ladite baleine vient prendre appui lors du déploiement de première partie des moyens d'occultation.

Dans ce cas, ladite ou lesdites butées peuvent être montées sur lesdits moyens de guidage, au voisinage desdits moyens d'orientation.

Avantageusement, ladite baleine porte à chacune de ses extrémités un patin ou une roulette susceptible de se déplacer dans lesdits premiers moyens de guidage.

Selon une solution avantageuse de l'invention, le dispositif comprend une barre de tirage montée sur l'extrémité desdits moyens d'occultation.

Dans le cas de moyens d'orientation montés mobiles le long des moyens de guidage, ladite barre de tirage est montée coulissante sur lesdits moyens d'orientation.

Dans ce cas, ladite barre de tirage est avantageusement susceptible de coulisser sur lesdits moyens d'orientation entre au moins deux positions :
- une position extrême correspondant au déploiement complet de ladite toile ;
- une position de rangement correspondant au repliement complet de ladite toile.

On évite de cette façon une occultation résiduelle du pavillon sur une longueur correspondant à celle des moyens d'orientation articulés.

Selon une solution avantageuse, les dits moyens d'orientation présentent des moyens d'arrêt du coulissement de la barre de tirage, susceptibles d'agir au moins lorsque ladite barre de tirage occupe ladite position extrême pour l'empêcher de coulisser vers ladite position de rangement, et/ou inversement.

De cette façon, on peut en particulier maintenir la toile en position d'occultation partielle du pare-brise, ceci à l'encontre d'une éventuelle force de rappel s'exerçant sur les moyens d'occultation.

Préférentiellement, lesdits moyens d'occultation sont montés sur un cadre partiel formant un U, la base dudit U formant avantageusement barre de tirage et portant préférentiellement une poignée de préhension.

Un tel agencement permet de recréer l'apparence traditionnelle des palettes pare-soleil, en proposant une toile entourée sur trois de ses côtés d'un encadrement.

En outre, un tel encadrement contribue au maintien et à la bonne tenue de la toile dans sa position de protection des yeux des occupants des sièges avant, ceci en l'absence de moyens de guidage latéraux.

Avantageusement, les bords latéraux dudit U coulissent dans lesdits moyens de guidage.

On obtient ainsi la possibilité d'escamoter la plupart des éléments visibles.

Selon une première variante dudit cadre, celui-ci est constitué de demi-coques solidarisées entre elles.

Selon une deuxième variante dudit cadre, celui-ci est surmoulé sur une partie des bords desdits moyens d'occultation. Dans ce cas, ledit organe d'entraînement est avantageusement surmoulé sur une portion desdits moyens d'entraînement.

Selon l'une ou l'autre de ces variantes, ledit cadre peut être réalisé en un matériau semi-rigide.

Comme déjà mentionné, selon une solution préférée de l'invention, lesdits moyens d'occultation comprennent au moins une toile d'occultation.

Selon une première variante de ladite toile, celle-ci est unique et couvre lesdites première et seconde parties des moyens d'occultation

Selon une autre variante, lesdites première et seconde parties des moyens d'occultation sont constituées d'au moins deux tronçons réalisés en des tissus différents, lesdits tronçons étant préférentiellement solidarisés l'un à l'autre au niveau de ladite baleine ou au voisinage de celle-ci.

On peut de cette façon mettre en oeuvre un tissu approprié à la fonction « anti-éblouissement » (par exemple tissu suffisamment opaque) et un tissu approprié à la fonction d'occultation du pavillon (par exemple un tissu moins opaque).

L'invention concerne également les véhicules équipés d'un dispositif d'occultation tel que décrit précédemment.

D'autres caractéristiques et avantages de l'invention apparaîtront plus clairement à la lecture de la description d'un mode de réalisation préférentiel de l'invention, donné à titre d'exemple illustratif et non limitatif et des dessins annexés parmi lesquels :
- les figures 1 et 2 sont des vues respectivement en perspective et en coupe d'un véhicule destiné à être équipé d'un dispositif d'occultation selon l'invention ;
- la figure 3 est une vue schématique de côté d'un dispositif d'occultation selon l'invention ;
- la figure 4 est une vue schématique de côté illustrant les moyens de retenue de la toile parallèlement au pavillon ;
- la figure 5 est une vue en perspective d'un mode de réalisation particulier d'un dispositif d'occultation selon l'invention ;
- la figure 6 est une vue en perspective d'un autre mode de réalisation particulier de l'invention.

Tel que mentionné précédemment, le principe à la base de l'invention est de combiner la fonction d'occultation d'un pavillon de véhicule exercée par la toile d'un store avec la fonction de protection des yeux des occupants des sièges avant.

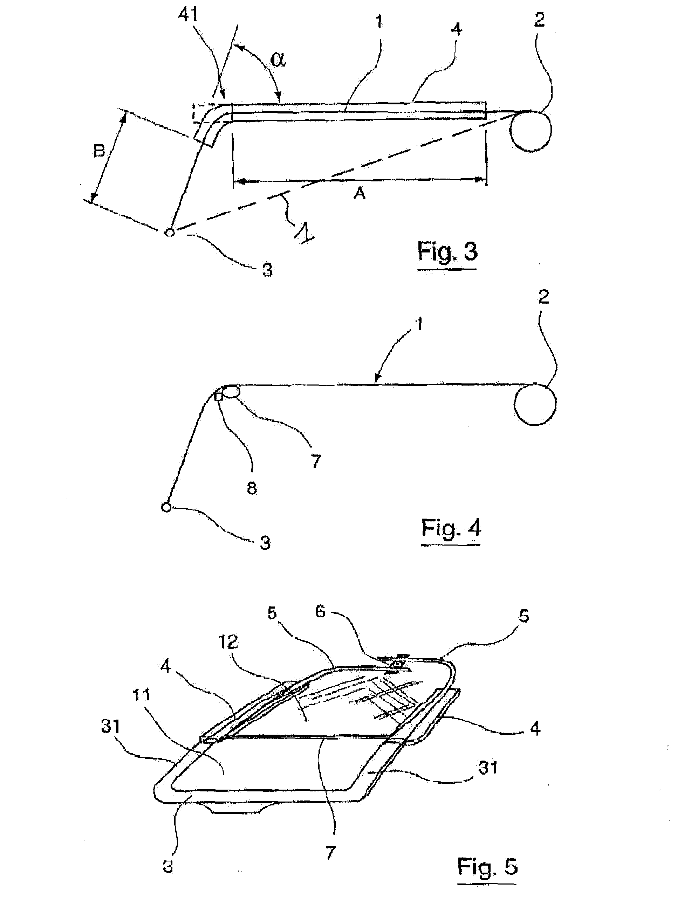

En référence à la figure 3, un store d'occultation du pavillon d'un véhicule comprend une toile 1 reliée par l'une de ses extrémités à un tube d'enroulement 2 couplé à des moyens de rappel élastiques (non représentés), et par l'autre de ses extrémités à une barre de tirage 3, formant organe d'entraînement de la toile et susceptible d'être déplacé le long de moyens de guidage et/ou de maintien, en l'occurrence des rails latéraux 4, en étant guidé par ceux-ci.

Selon l'invention, le dispositif comprend des moyens d'orientation (plus précisément, de modification de l'orientation) permettant d'orienter le déploiement de la toile 1, au-delà des rails 4, vers une protection des yeux d'un occupant d'un siège avant du véhicule.

Ainsi, en position de déploiement complet du store, la toile 1 exerce une double fonction :
- une fonction de protection des yeux des occupants avant, à la façon d'une palette pare-soleil, dans la partie A (première partie) ;
- une fonction d'occultation du pavillon du véhicule, dans la partie B (seconde partie).

Selon le présent mode de réalisation, les moyens d'orientation sont constitués par des rails latéraux 41 incurvés vers le bas, s'étendant dans le prolongement des rails 4.

Ces rails incurvés 41 permettent donc de dévier la toile 1 par rapport au plan du pavillon (sensiblement horizontal) d'un angle α, qui pourra varier bien entendu autant que de besoin en fonction notamment du véhicule dans lequel le dispositif d'occultation selon l'invention et monté.

On note que les rails incurvés 41 sont préférentiellement dimensionnés de façon à présenter un encombrement le plus réduit possible dans le plan vertical.

Selon des variantes envisageables, les rails 41 peuvent être réalisés dans un matériau déformable et/ou sont montés articulés sur les rails 4 de façon à pouvoir occuper au moins deux positions :
- une position selon laquelle les rails 41 sont parallèles aux rails 4 (tels que représentés en traits pointillés sur la figure 3) ;
- une position selon laquelle ils permettent d'orienter la toile 1 vers le bas.

Dans ce cas, l'utilisateur peut régler lui-même et à volonté l'inclinaison de la toile 1 lorsqu'elle exerce sa fonction de protection des yeux.

Selon une autre caractéristique de l'invention, on prévoit une baleine 7 (figure 4) présentant à chacune de ses extrémités un patin susceptible de coulisser dans les rails 4, et soutenant la toile 1 lorsqu'elle est déployée.

Cette baleine 7 est destinée à venir en appui contre une butée 8 portée par les rails 4, au voisinage des rails 41.

De cette façon, la toile 1 est maintenue parallèle au plan du pavillon (ou plus précisément au plan défini par les rails 4) en s'étendant entre la baleine 7 et le tube d'enroulement 2.

D'autres baleines intermédiaires peuvent être prévues, en cas de besoin. Dans d'autres cas, notamment lorsque l'on met en oeuvre un cadre semi-rigides, de telles baleines peuvent ne pas être utiles.

Selon une autre approche envisageable, la toile 1 est déployée dans un plan unique à partir du tube d'enroulement 2, de façon à former un angle non nul avec le pavillon du véhicule (la toile occupant alors une position telle qu'illustrée en traits pointillés sur la figure 1).

Les moyens d'orientation pour amener la toile dans une telle position peuvent être du type de ceux décrits précédemment.

Selon un mode de réalisation particulier, la barre de tirage 3 est la base d'un cadre partiel en forme de U, ce cadre présentant des prolongements latéraux 31 (tel qu'illustré par la figure 5). Elle peut porter une poignée 32 intégrée au cadre.

Cet encadrement en forme de U est réalisé par surmoulage d'un matériau semi-rigide sur les rebords de la toile, les prolongements 31 étant conformés de façon à pouvoir coulisser dans les rails 4.

L'encadrement en forme de U pourrait, selon un autre mode de réalisation envisageable, être constitué de demi-coques solidarisées entre elles de façon à pincer les bords de la toile.

Par ailleurs, l'ensemble formé par la barre de tirage et ses prolongements latéraux sont solidaires de deux vis sans fin semi-rigides 5 coudées de façon à s'engrener avec un pignon commun 6.

Dans le cas de l'ensemble en forme de U surmoulé sur la toile, ce surmoulage est réalisé de façon à englober au moins les extrémités des vis sans fin.

On note que ces vis sans fin, de par le matériau semi-rigide dans lequel elles sont réalisées, contribuent à assurer la tenue et le maintien de la toile 1 dans la position de protection des yeux des occupants avant.

Selon un mode de mise en oeuvre manuel (l'utilisateur agissant sur la poignée solidaire de, ou formée sur la barre de tirage), le pignon 6 est fou. Il est toutefois aisé, selon un autre mode de réalisation, de motoriser le dispositif. Selon une approche efficace, la motorisation agit sur le pignon pour entraîner les vis sans fin.

Dans l'un ou l'autre des cas, il est prévue de pouvoir retenir la toile en toutes positions en faisant agir un frein sur l'axe de rotation du pignon 6 (ce frein étant obtenu directement par l'arrêt par des moyens de motorisation dans le cas d'un mode motorisé), à l'encontre de l'action des moyens de rappel élastiques couplés au tube d'enroulement.

On note que la toile 1 peut être constituée de deux tronçons 11, 12 de tissu s'étendant de part et d'autre de la baleine 7 en étant reliés au voisinage de celle-ci (ou, selon un autre mode de réalisation, en étant relié par l'intermédiaire de celle-ci). A titre indicatif, le tissu du tronçon 11 peut être plus opaque que le tissu du tronçon 12.

Selon une autre approche, un seul tronçon de toile peut être prévu.

Par ailleurs, la toile peut être remplacée par d'autres moyens d'occultation, tels que par exemple une série de lamelles.

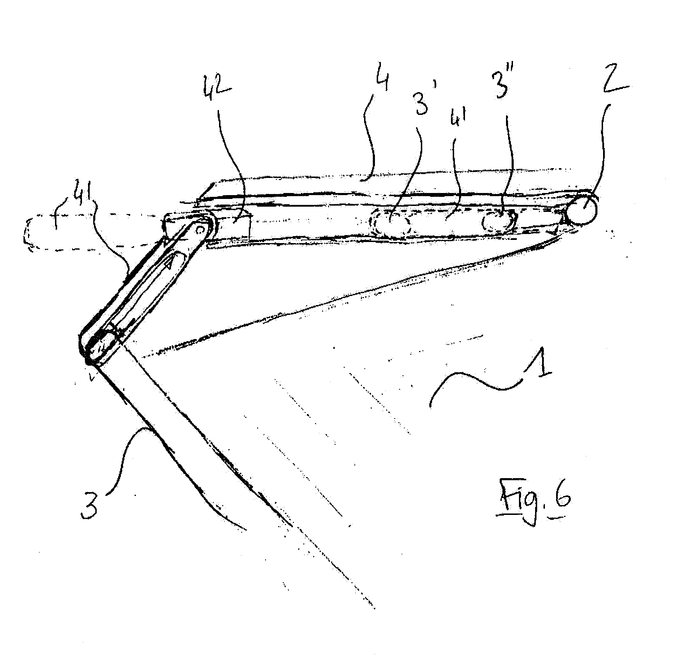

La figure 6 illustre un autre mode de réalisation de l'invention selon lequel les moyens d'orientation 41 peuvent être déplacés le long des rails de guidage 4.

Pour cela, ces moyens de guidage 41 sont chacun montés articulés sur un patin de coulissement 42 susceptible d'entraîner le déploiement/repliement de la toile 1.

L'articulation entre les moyens d'orientation 41 et les patins 42 permettent de déplacer les moyens d'orientation 41 entre deux positions :
- une position selon laquelle les moyens d'orientation 41 (en traits pointillés sur la figure 6), s'étendent dans le prolongement des patins 42 de façon à pouvoir coulisser à l'intérieur des rails de guidage 4 ;
- une position selon laquelle les moyens d'orientation 41 sont inclinés vers le bas, tels qu'ils apparaissent en traits pleins sur la figure 6.

De plus, on prévoit des moyens d'indexation (non représentés) de la position des moyens d'orientation 41 par rapport aux patins 42.

Ces moyens d'indexation peuvent être constitués par tout moyen approprié tel qu'un système à crans .

On note que, selon le présent mode de réalisation, la barre de tirage 3 est susceptible de coulisser le long des moyens d'orientation 41 entre une position extrême correspondant au déploiement complet de la toile et une position de rangement.

Cette position de rangement est obtenue lors du repliement complet de la toile : lorsque les moyens d'orientation arrivent en butée au voisinage du tube d'enroulement 2 de la toile, la barre de tirage coulisse à l'intérieur des moyens d'orientation 41 pour passer de la position 3' à la position 3", ceci sous l'action de l'effort de rappel exercé sur la toile par le tube d'enroulement.

On prévoit en outre des moyens d'arrêt (non représentés) du coulissement de la barre de tirage, ceux-ci étant conçus et montés sur les moyens d'orientation de telle sorte qu'ils maintiennent la barre de tirage en position de déploiement complet (tel qu'illustré sur la figure 6 en traits pleins), ceci à l'encontre d'une éventuelle force de rappel exercée sur la toile par le tube d'enroulement.

Ces moyens d'arrêt peuvent être de tout type, et peuvent par exemple comprendre un système de ressort à lames judicieusement positionné.

On note qu'un système à baleine tel que décrit précédemment peut être associé à ce mode de réalisation. En l'occurrence, les patins 42 pourront efficacement faire office de baleine en couplant la toile à chacun des patins de sorte qu'en position déployée, la toile s'étend dans un plan parallèle au pavillon puis dans un plan défini par les moyens d'orientation.

## Revendications

1. Dispositif d'occultation d'un pavillon de véhicule automobile, du type mettant en oeuvre des moyens d'occultation (1) mobiles guidés le long de moyens de guidage (4) s'étendant sensiblement parallèlement audit pavillon, **caractérisé en ce qu'**une première partie desdits moyens d'occultation peut être déployée au-delà desdits moyens de guidage pour prendre une position d'occultation d'une portion supérieure du pare-brise dudit véhicule.

2. Dispositif d'occultation selon la revendication 1, **caractérisé en ce que** ladite première partie des moyens d'occultation forme un angle non nul avec une seconde partie desdits moyens d'occultation occultant au moins une portion dudit pavillon.

3. Dispositif d'occultation selon la revendication 1, **caractérisé en ce que**, lorsque ladite première partie des moyens d'occultation est déployée au delà des moyens de guidage, lesdits moyens d'occultation s'étendent dans un plan formant un angle non nul avec ledit pavillon.

4. Dispositif d'occultation selon l'une quelconque des revendications 1 à 3, **caractérisé en ce qu'**il comprend des moyens d'orientation (41) permettant d'amener ladite première partie des moyens d'occultation dans ladite position d'occultation d'une portion supérieure du pare-brise dudit véhicule.

5. Dispositif d'occultation selon la revendication 4, **caractérisé en ce que** lesdits moyens d'orientation (41) s'étendent dans le prolongement desdits moyens de guidage (4).

6. Dispositif d'occultation selon l'une quelconque des revendications 4 et 5, **caractérisé en ce que** lesdits moyens d'orientation s'étendent sur une courte distance par rapport à la longueur de ladite première partie des moyens d'occultation.

7. Dispositif d'occultation selon l'une quelconque des revendications 4 à 6, **caractérisé en ce que** lesdits moyens d'orientation (41) comprennent au moins une portion de rail incurvée.

8. Dispositif d'occultation selon l'une quelconque des revendications 4 et 5, **caractérisé en ce que** lesdits moyens d'orientation (41) sont mobiles de façon à pouvoir occuper au moins deux positions :
- une position selon laquelle ils sont parallèles auxdits premiers moyens de guidage ;
- une position selon laquelle ils orientent lesdits moyens d'occultation vers le bas.

9. Dispositif d'occultation selon la revendication 8, **caractérisé en ce que** lesdits moyens d'orientation (41) sont réalisés dans un matériau déformable et/ou montés articulés sur lesdits premiers moyens de guidage (4).

10. Dispositif d'occultation selon la revendication 4, **caractérisé en ce que** lesdits moyens d'orientation sont montés mobiles le long desdits moyens de guidage (4).

11. Dispositif d'occultation selon la revendication 10, **caractérisé en ce que** lesdits moyens d'orientation (41) sont montés sur au moins un élément de base (42) par l'intermédiaire d'une articulation, de telle sorte que lesdits moyens d'orientation puissent occuper au moins deux positions :
- une position selon laquelle lesdits moyens d'orientation (41) et ledit élément de base (42) sont dans le prolongement l'un de l'autre et sensiblement parallèles auxdits moyens de guidage (4) ;
- une position correspondant à ladite position d'occultation selon laquelle lesdits moyens d'orientation (41) sont inclinés vers le bas.

12. Dispositif d'occultation selon la revendication 11, **caractérisé en ce qu'**il comprend des moyens d'indexation de la position desdits moyens d'orientation (41) par rapport audit ou auxdits éléments de base (42).

13. Dispositif d'occultation selon l'une des revendications 11 et 12, **caractérisé en ce que** ledit ou lesdits éléments de base (42) forment chacun un patin de coulissement le long desdits moyens de guidage (4).

14. Dispositif d'occultation selon l'une quelconque des revendications 1 à 13, **caractérisé en ce qu'**il comprend des éléments semi-rigides (5) assurant le guidage et/ou le maintien desdits moyens d'occultation dans ladite position d'occultation d'une portion supérieure du pare-brise dudit véhicule.

15. Dispositif d'occultation selon la revendication 14, **caractérisé en ce que** lesdits éléments semi-rigides sont des moyens d'entraînement (5) desdits moyens d'occultation.

16. Dispositif d'occultation selon les revendications 14 et 15, **caractérisé en ce que** lesdits moyens d'entraînement (5) comprennent deux vis sans fin semi-rigides s'étendant chacune respectivement au voisinage d'un bord latéral desdits moyens d'occultation (1).

17. Dispositif d'occultation selon la revendication 16, **caractérisé en ce que** lesdites vis sans fin s'engrènent avec au moins un pignon commun (6).

18. Dispositif d'occultation selon la revendication 17, **caractérisé en ce que** ledit pignon (6) est un pignon fou.

19. Dispositif d'occultation selon la revendication 16, **caractérisé en ce que** ledit pignon (6) est couplé à des moyens motorisés.

20. Dispositif d'occultation selon l'une quelconque des revendications 1 à 19, **caractérisé en ce qu'**il comprend des moyens permettant d'arrêter lesdits moyens d'occultation (1) en plusieurs positions de déploiement desdits moyens d'occultation (1).

21. Dispositif d'occultation selon les revendications 17 et 20, **caractérisé en ce que** lesdits moyens d'arrêt agissent sur ledit pignon (6), de façon à le maintenir immobile en rotation.

22. Dispositif d'occultation selon l'une quelconque des revendications 1 à 21, **caractérisé en ce qu'**il comprend des moyens de maintien (7) de ladite seconde partie des moyens d'occultation sensiblement parallèle audit pavillon, lorsque ladite première partie des moyens d'occultation est déployée.

23. Dispositif d'occultation selon la revendication 22, **caractérisé en ce que** lesdits moyens de maintien (7) comprennent une baleine s'étendant transversalement par rapport à l'axe de déploiement desdits moyens d'occultation (1).

24. Dispositif d'occultation selon la revendication 23, **caractérisé en ce qu'**il comprend au moins une butée (8) contre laquelle ladite baleine vient prendre appui lors du déploiement de première partie des moyens d'occultation.

25. Dispositif d'occultation selon la revendication 24, **caractérisé en ce que** ladite ou lesdites butées (8) sont montées sur lesdits moyens de guidage (4), au voisinage desdits moyens d'orientation (41).

26. Dispositif d'occultation selon l'une quelconque des revendications 23 à 25, **caractérisé en ce que** ladite baleine porte à chacune de ses extrémités un patin ou une roulette susceptible de se déplacer dans lesdits premiers moyens de guidage (4).

27. Dispositif d'occultation selon l'une quelconque des revendications 1 à 26, **caractérisé en ce qu'**il comprend une barre de tirage (3) montée sur l'extrémité desdits moyens d'occultation.

28. Dispositif d'occultation selon les revendications 10 et 27, **caractérisé en ce que** ladite barre de tirage (3) est montée coulissante sur lesdits moyens d'orientation (41).

29. Dispositif d'occultation selon la revendication 28, **caractérisé en ce que** ladite barre de tirage (3) est susceptible de coulisser sur lesdits moyens d'orientation (41) entre au moins deux positions :
- une position extrême correspondant au déploiement complet de ladite toile ;
- une position de rangement correspondant au repliement complet de ladite toile.

30. Dispositif d'occultation selon l'une des revendications 28 et 29, **caractérisé en ce que** les dits moyens d'orientation présentent des moyens d'arrêt du coulissement de la barre de tirage (3), susceptibles d'agir au moins lorsque ladite barre de tirage (3) occupe ladite position extrême pour l'empêcher de coulisser vers ladite position de rangement, et/ou inversement.

31. Dispositif d'occultation selon l'une quelconque des revendications 1 à 30, **caractérisé en ce que** lesdits moyens d'occultation sont montés sur un cadre partiel formant un U.

32. Dispositif d'occultation selon la revendication 31, **caractérisé en ce que** la base dudit U forme barre de tirage.

33. Dispositif d'occultation selon la revendication 32, **caractérisé en ce que** la base dudit U porte une poignée de préhension.

34. Dispositif d'occultation selon l'une quelconque des revendications 31 à 33, **caractérisé en ce que** les bords latéraux (31) dudit U coulissent dans lesdits moyens de guidage (4).

35. Dispositif d'occultation selon l'une des revendications 31 à 34, **caractérisé en ce que** ledit cadre (3) est constitué de demi-coques solidarisées entre elles.

36. Dispositif d'occultation selon l'une des revendications 31 à 34, **caractérisé en ce que** ledit cadre (3) est surmoulé sur une partie des bords de desdits moyens d'occultation (1).

37. Dispositif d'occultation selon la revendication 36, **caractérisé en ce que** ledit cadre (3) est également surmoulé sur une portion desdits moyens d'entraînement (5).

38. Dispositif d'occultation selon l'une quelconque des revendications 1 à 37, **caractérisé en ce que** ledit cadre (3) est réalisé en un matériau semi-rigide.

39. Dispositif d'occultation selon l'une quelconque des revendications 1 à 38, **caractérisé en ce que** lesdits moyens d'occultation comprennent au moins une toile d'occultation.

40. Dispositif d'occultation selon la revendication 39, **caractérisé en ce que** ladite toile est unique et couvre lesdites première et seconde parties des moyens d'occultation.

41. Dispositif d'occultation selon la revendication 39, **caractérisé en ce que** lesdites première et seconde parties des moyens d'occultation (1) sont constituées d'au moins deux tronçons (11), (12) réalisés en des tissus différents.

42. Dispositif d'occultation selon les revendications 23 et 41, **caractérisé en ce que** lesdits tronçons (11), (12) sont solidarisés l'un à l'autre au niveau de ladite baleine ou au voisinage de celle-ci.

43. Véhicule **caractérisé en ce qu'**il comprend un dispositif d'occultation de pavillon, du type mettant en oeuvre des moyens d'occultation (1) mobiles guidés le long de moyens de guidage (4) s'étendant sensiblement parallèlement audit pavillon, une première partie desdits moyens d'occultation pouvant être déployée au-delà desdits moyens de guidagepour prendre une position d'occultation d'une portion supérieure du pare-brise dudit véhicule.
